# EUROPÄISCHE PATENTSCHRIFT

(11) **EP 1 582 286 B1**
(45) Veröffentlichungstag und Bekanntmachung des Hinweises auf die Patenterteilung: **15.07.2009**
(21) Anmeldenummer: 05004399.1
(22) Anmeldetag: 01.03.2005
(51) Int. Cl.: B23K 11/25

(54) **Verfahren zur Verbesserung der Qualität eines Schweisspunktes**
Method for improving the quality of a spot-weld
Méthode d'amélioration de la qualité d'une soudure par point

(30) Priorität: 29.03.2004 DE 102004015689
(43) Veröffentlichungstag der Anmeldung: 05.10.2005
(73) Patentinhaber: COSYTRONIC Computer-System-Elektronic KG, 57537 Wissen/Sieg (DE); MICOM Technologie Gesellschaft für Automation mbH & Co. KG, 52076 Aachen (DE)
(72) Erfinder: Heinz, Heribert, 57537 Wissen (DE); Rennau, Wolfram, Dr., 52076 Aachen (DE)
(74) Vertreter: Kohlmann, Kai

(56) Entgegenhaltungen:
- EP-A- 1 291 113
- DE-A1- 2 800 962
- US-B1- 6 232 572
- US-B1- 6 624 378

## Beschreibung

Die Erfindung betrifft ein Verfahren zur Verbesserung der Qualität eines Schweißpunktes zwischen mindestens zwei Blechteilen beim elektrischen Widerstandsschweißen mittels einer Schweißvorrichtung mit zwei Elektroden sowie einer Widerstandsschweißsteuerung und einer Steuerung für die Schweißvorrichtung.

Das elektrische Widerstandsschweißen- auch Widerstandspressschweißen genannt- lässt sich gut automatisieren und wird in großem Umfang insbesondere in der Automobilindustrie zum Verbinden von mindestens zwei Blechen angewendet.

Die zu verschweißenden Bleche werden zwischen zwei Elektroden zusammengepresst, die vorzugsweise je eine Schweißkappe mit einer genau definierten Geometrie als Kontaktfläche aufweisen. Die Kraft für die Schließbewegung der an Elektrodenarmen befestigten Elektroden erzeugen beispielsweise elektrisch angetriebene Motorspindeln oder aber auch pneumatische Zylinder.

Der Schweißstrom an der Kontaktstelle zwischen den zusammengepressten Blechen bewirkt eine Temperaturerhöhung, die zur Aufschmelzung der beiden Blechteile bis maximal zu deren Oberfläche führt. Das gemeinsame Schweißbad an der Kontaktstelle wird Schweißlinse genannt. Eine an die Aufschmelzung anschließende Abkühlung unter Wirkung von Presskräften führt zu einer Erstarrung der Schweißlinse, so dass die Bleche mechanisch miteinander verbunden sind.

Aus der EP 0594 086 B1 ist eine pneumatische betriebene Schweißzange bekannt, bei der auf einem Elektrodenarm ein Kraftsensor angeordnet ist. Aufgrund der gemessenen Elektrodenkraft soll die Qualität des Schweißpunktes beurteilt und entschieden werden, ob ggf. ein weiterer, benachbarter Schweißpunkt erforderlich ist. Der Kraftsensor ist ein konstruktiv aufwendiger optischer Sensor, dessen Wirkungsweise darauf beruht, dass die über einen Lichtweg im Sensorelement übertragene Lichtmenge eine Funktion der Verformung des den Lichtweg aufweisenden Teils des Sensors ist. Der Sensor ist über Lichtleiter mit einer opto-elektronischen Einheit verbunden, die für jeden Schweißpunkt die Beurteilung der Qualität und die sich daraus ergebenden Steuermaßnahmen durchführt.

Aus der EP 0344 034 B1 ist eine Schweißzange zum elektrischen Widerstandsschweißen mit an zwei Elektrodenarmen befestigten Elektroden bekannt, wobei jeder Elektrodenarm endseitig von einer Elektrodenarmhalterung aufgenommen wird. Ein piezoelektrisches Sensorelement dient zur Erfassung eines Kraftistwertes zwischen den beiden Elektroden, wobei das Sensorelement an einer der nicht von dem Schweißstrom durchflossenen Elektrodenarmhalterungen angeordnet ist. Die Kraftmessung während des Schweißens dient dem Ziel, die Dauer jedes Schweißvorgangs zu optimieren, insbesondere zu verkürzen.

Die US 6,232,572 offenbart ein Punktschweißsteuersystem für eine Elektrodenschweißvorrichtung mit einer Erfassungseinrichtung zur im wesentlichen kontinuierlichen Erfassung eines Elektrodenabstandes des Elektrodenpaares zu einer Bezugsposition mit Hilfe einer Entscheidungseinrichtung, die über einen Schweißzustand des Schweißobjektes in Abhängigkeit der durch die Erfassungseinrichtung erfassten Änderung des Elektrodenabstandes eine Entscheidung trifft. Wenn die von der Erfassungseinrichtung erfasste Änderung des Elektrodenabstandes in erlaubten Grenzen der Bezugsdaten liegt, wird eine Schweißung durchgeführt. Wenn die erfassten Daten außerhalb der erlaubten Grenzen liegen und sich die Schweißbedingungen nicht vor Setzen des Schweißpunktes korrigieren lassen, wird die Verschweißung unterbrochen.

Schließlich ist aus der EP 1 291 113 A1 ein Verfahren zur Beurteilung der Qualität einer Schweißverbindung von mindestens zwei Blechteilen mittels einer Schweißvorrichtung mit gegeneinander beweglichen Elektroden bekannt, bei dem in der Schweißphase der Kraftistwert von einer Zangensteuerung ausgewertet wird. Aus dieser Auswertung können Rückschlüsse auf die Qualität der Schweißverbindung gezogen werden. Für die Auswertung ist es allerdings erforderlich, dass zuvor die Zangensteuerung nach Erreichen eines Kraftgrenzwertes zwischen den Elektroden von einer Positionsregelung auf eine Drehzahlregelung umgeschaltet wird und der Antriebsstrom der Spindel auf einen Stromgrenzwert unterhalb des maximal möglichen Antriebsstroms begrenzt wird.
Ein wesentliches Beurteilungsmerkmal für die Schweißqualität beim elektrischen Widerstandsschweißen ist die Eindringtiefe der Schweißelektroden bzw. der sie umgebenden Elektrodenkappen. Die Eindringtiefe ist die Differenz der Abstände der Elektroden vor, während und nach der Schweißung. Eine ordnungsgemäß durchgeführte Widerstandsschweißung führt regelmäßig zu einer messbaren Eindellung an den Kontaktstellen zwischen den Elektroden und den Blechoberflächen. Durch Erfassen der Eindringtiefe während und nach eines jeden Schweißvorgangs und einem Vergleich mit vorgegebenen Parametern lässt sich daher die Qualität einer Verschweißung ermitteln. Die Burteilung der Schweißqualität erlaubt es, nach der Schweißung geeignete Maßnahmen einzuleiten, wie beispielsweise eine Widerholung des Schweißvorgangs.

Ausgehend von dem Stand der Technik nach der EP 1 291 113 A1 liegt der Erfindung die Aufgabe zu Grunde, als fehlerhaft erkannte Schweißpunkte durch erneutes Setzen des Schweißpunktes zu reparieren.

In der Praxis hat sich herausgestellt, dass eine bloße Wiederholung der Verschweißung in der Regel nicht zu einer erfolgreichen Verschweißung führt, insbesondere hierdurch keine ausreichende Eindringtiefe erreicht wird. Überraschend hat sich heraus gestellt, dass eine Variation der Schweißparameter bei einer Wiederholung einer Verschweißung mit zu geringer Eindringtiefe mit hoher Wahrscheinlichkeit zu einem ordnungsgemäßen Schweißpunkt mit ausreichender Eindringtiefe führt.

Im einzelnen wird die Aufgabe bei einem Verfahren der eingangs erwähnten Art dadurch gelöst,
- dass nach dem Erkennen einer zu geringen Eindringtiefe der Elektroden bei einem Schweißpunkt die Verschweißung dieses Schweißpunktes mit geänderten Schweißparametern mindestens einmal wiederholt wird,
- dass die Schweißzeit und /oder der Schweißstrom für die Wiederholungsschweißung von der Steuerung geändert wird und
- dass die Verschweißung mit geänderten Schweißparametern so oft wiederholt wird, bis eine ausreichende Eindringtiefe ermittelt oder die Verschweißung abgebrochen wird.

Als zu ändernde Parameter kommen die Schweißzeit und /oder der Schweißstrom in Betracht.

In der Regel wird die Verschweißung mit geänderten Schweißparametern einmal wiederholt. Wird nach der Wiederholung keine ausreichende Eindringtiefe ermittelt, wird die Verschweißung abgebrochen.

Unterschiedliche Möglichkeiten zur Änderung der Schweißparameter ergeben sich aus den Merkmalen der Unteransprüche 2 bis 4.

Wegen der zunehmenden Tendenz die Widerstandsschweißsteuerung und die Steuerung der Schweißvorrichtung zusammenzufassen, bietet es sich an, an die Widerstandsschweißsteuerung für jeden Schweißpunkt ein separates Programm von der Steuerung zu übertragen und für die Wiederholungsschweißung ein Programm mit geänderten Parametern zu übertragen.

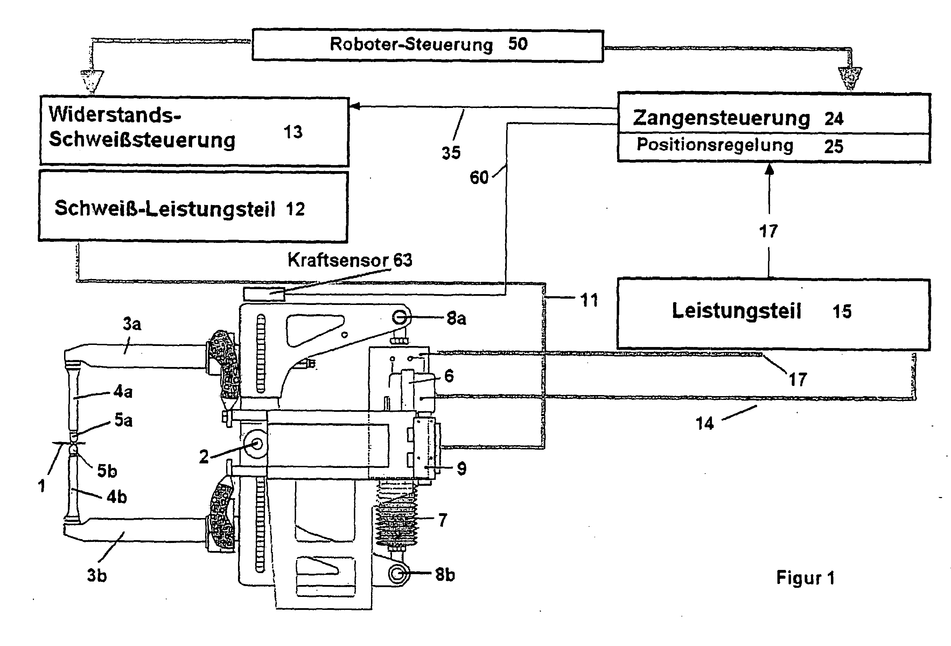

Eine Schweißzange zur Durchführung des Verfahrens ist in Figur 1 dargestellt:
Figur 1 zeigt eine Schweißzange zum Verbinden von Blechteilen 1 mit zwei um einen gemeinsamen Drehpunkt 2 schwenkbaren Elektrodenarmen 3 a, b. An den äußeren Enden der Elektrodenarme 3 a, b sind Stiftelektroden 4a,b angeordnet, die stirnseitig an der Kontaktstelle mit den Blechteilen 1 von Elektrodenkappen 5a, 5b umgeben werden. An den gegenüberliegenden Enden sind die Elektrodenarme 3a, 3b in Elektrodenarmhalterungen gesteckt und mittels Schrauben festgeklemmt.

Der Abstand der Elektroden 4 a, b lässt sich mit einer von einem Elektromotor insbesondere einem Servomotor angetriebenen Spindel 7 verändern, in dem sie den Abstand zwischen an den gegenüberliegenden Enden der Elektrodenarme 3 a, b angeordneten Gelenken 8a, 8b verändert.

Der Schweißstrom fließt von einen Schweißtransformator 9 durch die Elektrodenarme 3 a, b zu den Elektroden 4 a, b. Der Schweißtransformator 9 ist über ein Schweißstromkabel 11 mit einem von einer Widerstandsschweißsteuerung 13 gesteuerten Schweißleistungsteil 12 verbunden.

Ein im Kraftfluss zwischen Spindel und Elektroden, beispielsweise an der Elektrodenarmhalterung angeordneter Kraftsensor 63 liefert als Ausgangssignal eine elektrische Ladung, die direkt proportional der gemessenen Dehnung ist.

Der Kraftsensor ist zunächst zu kalibrieren, so dass er unabhängig vom Ort seiner Montage zutreffende Kraftistwerte zwischen den Elektroden 4a, 4b liefert. Dies wird in an sich bekannter Weise mittels eines geeichten Referenz-Kraftsensors durchgeführt, der unmittelbar die Kraft zwischen den Elektroden erfasst. In den Kraftsensor 63 ist ein in der Figur 1 nicht dargestellter Verstärker für die elektrische Ladung integriert, der die Änderung der elektrischen Ladung in ein Spannungssignal, den Kraftistwert 60, wandelt, und über ein Messkabel an eine Zangensteuerung 24 überträgt.

Der Elektromotor 6 für die Bewegung der Elektrodenarme 3a,3b ist über ein Motorkabel 14 mit einem handelsüblichen Leistungsteil 15 für den Antrieb von Schweißzangen verbunden.

Das Leistungsteil ist in an sich bekannter Weise mit einer Zangensteuerung 24 mit integrierter Positionsregelung 25 verbunden.

Der Zangen- und der Widerstandsschweiß-Steuerung (24,13) ist eine Roboter-Steuerung (50) vorgeordnet.

In dem dargestellten Ausführungsbeispiel sind die Widerstandsschweißsteuerung 13 und die Zangensteuerung 24 über einen Bus 35 miteinander verbunden. Für jeden Schweißpunkt wird über den Bus 35 ein separates Programm zur Steuerung des Schweiß-Leistungsteils 12 von der Zangensteuerung 24 übertragen, das die Parameter Schweißstrom und Schweißzeit enthält.

Durch eine Auswertung des Kraftistwertes 60 zwischen den Elektroden währen des Setzens des Schweißpunktes ist eine Erkennung der Eindringtiefe (typisch sind 0.100 mm) möglich. Ein Ausbleiben des Eindringens zeigt eindeutig eine fehlerhafte Verschweißung, beispielsweise aufgrund eines Nebenschlusses. Überschreitet die gemessene Eindringtiefe einen festgelegten unteren Grenzwert, besagt dies, dass die Elektroden 4a,b tief genug eingedrungen sind, so dass mit hoher Wahrscheinlichkeit ein ordnungsgemäßer Schweißpunkt vorliegt. Unterschreitet die gemessene Eindringtiefe einen festgelegten unteren Grenzwert, besagt dies, dass die Elektroden 4a,b nicht ausreichend eingedrungen sind, so dass mit hoher Wahrscheinlichkeit ein fehlerhafter Schweißpunkt vorliegt.

In diesem Fall kann durch Anwendung des erfindungsgemäßen Verfahrens der fehlerhafte Schweißpunkt repariert werden, in dem an die Widerstandsschweißsteuerung 13 für die Wiederholungsschweißung ein Programm mit geänderten Parametern über den Bus 35 von der Zangensteuerung 24 übertragen wird.

## Patentansprüche

1. Verfahren zur Verbesserung der Qualität eines Schweißpunktes zwischen mindestens zwei Blechteilen (1) beim automatisierten elektrischen Widerstandsschweißen mittels einer Schweißvorrichtung mit zwei Elektroden sowie einer Widerstandsschweißsteuerung (13) und einer Steuerung (24) für die Schweißvorrichtung , **dadurch gekennzeichnet,**
- **dass** nach dem Erkennen einer zu geringen Eindringtiefe der Elektroden bei einem Schweißpunkt die Verschweißung dieses Schweißpunktes mit geänderten Schweißparametern mindestens einmal wiederholt wird,
- **dass** die Schweißzeit und /oder der Schweißstrom für die Wiederholungsschweißung von der Steuerung geändert wird und
- **dass** die Verschweißung mit geänderten Schweißparametern so oft wiederholt wird, bis eine ausreichende Eindringtiefe ermittelt oder die Verschweißung abgebrochen wird.

2. Verfahren nach Anspruch 1, **dadurch gekennzeichnet, dass** in der Widerstandsschweißsteuerung für jeden Schweißpunkt ein separates Programm abgelegt ist und die Änderung der Schweißparameter in der Schweißsteuerung durch Auswahl eines anderen Programms für den Schweißpunkt erfolgt.

3. Verfahren nach einem der Ansprüche 1 oder 2, **dadurch gekennzeichnet, dass** in der Widerstandsschweißsteuerung für jeden Schweißpunkt ein separates Programm abgelegt ist und die Änderung der Schweißparametern unter Beibehaltung des Programms über einen zusätzlichen analogen oder digitalen Steuereingang oder über eine Busübertragung von der Steuerung aktiviert wird.

4. Verfahren nach dem Anspruch 1, **dadurch gekennzeichnet, dass** an die Widerstandsschweißsteuerung für jeden Schweißpunkt ein separates Programm von der Steuerung übertragen wird und für die Wiederholungsschweißung ein Programm mit geänderten Parametern übertragen wird.

5. Schweißvorrichtung mit mindestens zwei gegeneinander beweglichen Elektroden (4a, 4b), einer Widerstandsschweißsteuerung (13), einer elektrisch angetriebenen Spindel zum Bewegen mindestens einer der beiden Elektroden, Mitteln zum Erzeugen des Schweißstromes sowie einer Positionsregelung (25) für die elektrisch angetriebenen Spindel (7) **gekennzeichnet durch** eine Steuerung (24) die zur Durchführung des Verfahrens nach einem oder mehreren der Ansprüche 1 bis 4 ausgebildet ist.

6. Schweißvorrichtung nach Anspruch 5, **dadurch gekennzeichnet, dass** es sich um eine Schweißzange oder eine Schweißpresse handelt.

## Claims

1. A method for improving the quality of a welding spot between at least two sheet metal parts (1) during automated electrical resistance welding by means of a welding apparatus having two electrodes as well as a resistance welding controller (13) and a controller (24) for the welding apparatus, **characterised in**
- **that** after the detection of a too-small penetration depth of the electrodes at a welding spot, the welding of this welding spot is repeated with modified welding parameters at least once,
- **that** the welding time and/or the welding current for the repeated welding is modified by the controller and
- **that** the welding with modified welding parameters is repeated sufficiently frequently until a sufficient penetration depth is determined or the welding is interrupted.

2. The method according to claim 1, **characterised in that** a separate program for each welding spot is stored in the resistance welding controller and the modification of the welding parameters in the welding controller is made by selecting a different program for the welding spot.

3. The method according to one of claims 1 or 2, **characterised in that** a separate program for each welding spot is stored in the resistance welding controller and the modification of the welding parameters is activated whilst maintaining the program via an additional analogue or digital control input or via a bus transmission from the controller.

4. The method according to claim 1, **characterised in that** a separate program for each welding spot is transmitted to the resistance welding controller from the controller and a program with modified parameters is transmitted for the repeated welding.

5. A resistance welding apparatus comprising at least two electrodes (4a, 4b) which can be moved relative to one another, a resistance welding controller (13), an electrically driven spindle for moving at least one of the two electrodes, means for generating the welding current as well as a position control (25) for the electrically driven spindle (7), **characterised by** a controller (24) which is configured for carrying out the method according to one or more of claims 1 to 4.

6. The welding apparatus according to claim 5, **characterised in that** this comprises welding tongs or a welding press.

## Revendications

1. Procédé pour l'amélioration de la qualité d'un point de soudage entre au moins deux pièces en tôle (1) dans le cas du soudage par résistance électrique automatisé au moyen d'un dispositif de soudage pourvu de deux électrodes ainsi que d'une commande de soudage par résistance (13) et d'une commande (24) pour le dispositif de soudage, **caractérisé en ce que,**
- après la détection d'une profondeur de pénétration trop faible des électrodes à un point de soudage, le soudage de ce point de soudure est répété au moins une fois avec des paramètres de soudage modifiés,
- la durée de soudage et/ou le courant de soudage du soudage répété est modifié par la commande, et **en ce que**
- le soudage avec des paramètres modifiés est répété autant de fois que nécessaire, jusqu'à ce qu'une profondeur de pénétration suffisante soit détectée, ou jusqu'à ce que le soudage soit interrompu.

2. Procédé selon la revendication 1, **caractérisé en ce qu'**un programme séparé est mémorisé dans la commande de soudage par résistance pour chaque point de soudage et **en ce que** la modification des paramètres de soudage est réalisée dans la commande de soudage par la sélection d'un autre programme pour le point de soudage.

3. Procédé selon l'une des revendications 1 ou 2, **caractérisé en ce qu'**un programme séparé est mémorisé dans la commande de soudage par résistance pour chaque point de soudage et **en ce que** la modification des paramètres de soudage est activée par la commande au moyen d'une entrée de commande digitale ou analogique supplémentaire ou via une transmission bus, en conservant le programme.

4. Procédé selon la revendication 1, **caractérisé en ce qu'**un programme séparé est transmis par la commande à la commande de soudage par résistance pour chaque point de soudage et **en ce qu'**un programme avec des paramètres modifiés est transmis pour le soudage répété.

5. Dispositif de soudage avec au moins deux électrodes (4a, 4b) mobiles l'une par rapport à l'autre, une commande de soudage par résistance (13), une vis à commande électrique pour déplacer au moins l'une des deux électrodes, des moyens de génération du courant de soudage, ainsi qu'un asservissement de position (25) pour la vis à commande électrique (7), **caractérisé par** une commande (24) configurée pour la mise en oeuvre du procédé selon une ou plusieurs des revendications 1 à 4.

6. Dispositif de soudage selon la revendication 5, **caractérisé en ce qu'**il s'agit d'une pince à souder ou d'une presse à souder.
